# EUROPEAN PATENT SPECIFICATION

(11) **EP 2 725 953 B1**
(45) Date of publication and mention of the grant of the patent: **14.10.2015**
(21) Application number: 12748773.4
(22) Date of filing: 28.06.2012
(51) Int. Cl.: A47J 37/06

(54) **A CONTACT COOKING DEVICE OF THE PLANCHA TYPE**
GRILLARTIGE KONTAKTKOCHVORRICHTUNG
DISPOSITIF DE CUISSON PAR CONTACT DU TYPE PLANCHA

(30) Priority: 30.06.2011 FR 1102048
(43) Date of publication of application: 07.05.2014
(73) Proprietor: Thirode Grandes Cuisines Poligny, 39800 Poligny (FR)
(72) Inventor: BRUN, Jean-Marc, F-39230 Passenans (FR); LUBRINA, Yves, F-39800 Chaussenans (FR)
(74) Representative: Gevers France
(86) International application number: PCT/IB2012/053267
(87) International publication number: WO 2013/001477

(56) References cited:
- EP-A1- 0 908 129
- WO-A1-2008/026839
- US-A- 3 968 787
- US-A- 4 245 147
- US-A1- 2009 071 345

## Description

This invention relates to a contact cooking device. It relates here to a device for cooking food products on a plate, of the plancha type.

A plate cooking device, of the plancha type is known, comprising a cooking plate, adapted for receiving at least one food product to be cooked, and gas or electric heating means for heating and maintaining the plate at a substantially homogeneous and constant temperature.

The cooking plate comprises a lower side and an upper side, on which food products to be cooked are arranged. Throughout the remainder of the present description, the «lower side» refers to the lower side of the cooking plate when the latter is horizontal, in a use position, and the «upper side» refers to the upper side of the cooking plate when the latter is horizontal, in a use position.

The plate cooking device further comprises temperature controlling means having the shape of a sensor mounted in or under the cooking plate and allowing the heating means to be triggered when the temperature decreases.

In a first type of device, the heating means are arranged for directly heating the lower side of the plate. Thus, when the heating means heat the lower side of the plate, the heat is transmitted to the whole plate up to its upper side, thereby allowing food products being placed on the upper side to be cooked.

The operation of the cooking plate involves a preheating period at the end of which the cooking plate reaches a cooking temperature. When the cooking plate reaches its cooking temperature, placing on upper side of the cooking plate a food product to be cooked results in the temperature suddenly dropping, reducing the efficiency of the cooking.

A known solution to this problem involves drastically increasing the cooking temperature of the cooking plate up to, for example 350° Celsius, for instance increasing the duration of the preheating period of the cooking plate. Several problems then occur. First of all, in such a type of device, the cooking plate is relatively thick, of the order of 20 mm, involving a relatively large inertia at dropping state. The dropping state relates to the drop of the temperature of the plate. Thus, when a food product to be cooked is placed on the cooking plate, the temperature of the plate in the contact area locally drops. The time needed for the plate to reach again the cooking temperature is then all the longer as the plate is thick and as the food product to be cooked is arranged far from the temperature controlling point. This results in temperature discrepancies at different locations on the upper side of the cooking plate. Such discrepancies result in cooking differences of the food products depending on their location on the cooking plate and furthermore, some locations of the cooking plate are overheating while they do not receive any food product. Finally, such an overheating, upon the cooking of the food product, results in toxic components being produced on the upper side of the cooking plate in an area being peripheral to the food product to be cooked. Further, such components are difficult to clean and produce unpleasant or even toxic smokes for the operator of the device.

Another device is known, aimed at partially overcoming this problem, of the Accutemp® trademark. Such a plate cooking device, of the plancha type, comprises a cooking plate, adapted for receiving at least one food product to be cooked, and gas or electric heating means for heating and maintaining the plate at a substantially homogeneous and constant temperature through generation of saturated steam and water condensation under the plate.

Thus, when the device is in operation, water present in the in vacuo cavity arranged in the device under the cooking plate is heated by the heating means up to for instance 190° Celsius. The characteristics of the saturated steam result in a 13 bar pressure corresponding to that temperature. The laws of the saturated steam indicate that an equilibrium is formed between the temperature and the pressure, throughout the whole cavity. Condensation and boiling phenomena are combined so that there could not be, in a stable way, any temperature deviation in a cavity wherein only pure water and steam are present. Thus, when a food product to be cooked is arranged on the upper side of the cooking plate, the temperature drop being induced results in the steam present in the cavity becoming saturated, producing some water condensation on the lower side of the plate and a thermal stream at the level of the contact surface of the product to be cooked with the cooking plate, thereby considerably reducing the differences of temperature between the peripheral area of an element to be cooked arranged on the upper side of the plate and the surface of the upper side of the plate in contact with the element to be cooked.

In such devices, in order to withstand the pressure generated by the saturated steam on the lower side of the cooking plate, a shell allowing the pressure of the saturated steam in the cavity to be withstood is welded under the lower side of the cooking plate.

In such devices, connecting means having the shape of braces are provided for supporting the plate and maintaining it in a planar state, thereby preventing the deformations related to the pressure and to the temperature. Such braces have a cylindrical shape and are arranged under the cooking plate. They connect the cooking plate and the shell, allowing, more specifically, for the thickness of the cooking plate and the shell to be limited.

Mounting such braces occurs through welding, making it complex, difficult and time and material consuming. Using such braces further involves a deformation risk for the plate even breaking when being in operation, as a result of the spaced apart lay-out of the braces submitted to the pressure present in the cavity.

The prior art includes EP-A1-0 908 129.

The aim of this invention is to overcome at least in part such drawbacks. To this end, it relates to a device for cooking food products through contact, of the plancha type, comprising a cooking plate and heating means for heating and maintaining the plate at a substantially homogeneous and constant temperature through generating saturated steam and water condensation under the plate in the presence of products to be cooked, connecting means for the plate being provided for securing it in a planar state, characterized in that the connecting means are in the form of a pleated metal sheet which is soldered or brazed under the cooking plate and which is arranged so that the pressure generated by the saturated steam, itself generated by the presence of the products to be cooked on the plate, could be applied evenly substantially on the whole lower surface of the plate submitted to the action of the saturated steam.

Thus, the more the pressure is even under the cooking plate, that is the more the contact surface of the connecting means with the cooking plate is divided, the less the connecting means are spaced apart and the less the plate is likely to break.

According to a characteristic of this invention, the pleated metal sheet is arranged so that the water condensation, generated by the presence of products to be cooked on the plate, substantially extends on the whole lower surface of the plate submitted to the action of the saturated steam. Preferably, the water condensation generated by the presence of products to be cooked on the plate, evenly extends substantially on the whole lower surface of the plate submitted to the action of the saturated steam.

Thus, the larger the condensation surface, that is the lowest the contact surface of the connecting means with the cooking plate, the faster the variations of temperature will be compensated for by the transfer of heat caused by the water condensation with the products to be cooked. Thus, when the water condensation, under the action of the products to be cooked, substantially extends on the whole lower surface of the plate submitted to the action of the saturated steam, the inertia of the cooking plate is very low, and thus nearly optimum, allowing to compensate for the variations of temperature of the plate very quickly.

The connecting means are a pleated material. A pleated material, as used herein, refers to an accordion pleated material. The pleated material may be for instance a sheet being pleated as an accordion. Such a pleated material is easy to manufacture and to mount in the cavity of the cooking device, for instance through soldering or brazing under the cooking plate. Such a pleated material will furthermore remain static in the cavity because it extends substantially entirely on a large portion of the lower surface of the cooking plate. Furthermore, the contact surfaces of the pleated material with the lower side of the cooking plate are relatively low, allowing a homogeneous temperature of the cooking plate to be maintained more easily. The use of such a pleated material further will considerably reduce the thickness of the cooking plate as the connection between the pleated material and the cooking plate consists in multiple and near elements.

« Substantially on the whole lower surface of the plate » means nearly the entirety of said surface. Thus, for instance, in the case of the pleated material, the contact surfaces of the pleated material with the lower side of the cooking plate are relatively low and are represented by low thickness lines or low width strips, making each contact surface of the pleated material very low with respect to the lower total surface of the plate, thereby allowing a temperature of the plate to remain homogeneous and constant without the drawbacks of the prior art welds.

The pleated material is advantageously made as a metal sheet, the metal sheet being flexible and easy to transform so as to readily achieve such a pleated material.

In another embodiment of this invention, the connecting means have the shape of a grid. Such a grid is easy to manufacture and to mount in the cooking device under the plate.

Advantageously, upon the cooking device being in service, the pleated metal sheet are configured so that the temperature of a first point of the cooking plate, located on the upper side of the plate to the vertical of a contact area of the pleated metal sheet with the lower side of the cooking plate, is substantially identical to that of a second point of the cooking plate located at the vicinity of the first point and to the vertical of an area of the lower side of the plate that is not in contact with the pleated metal sheet.

In an embodiment of this invention, the cooking device further comprises a lower wall intended for being heated by the heating means and the pleated metal sheet is mounted between the cooking plate and said lower wall. This allows to reduce the thickness of the plate and thus to improve the thermal transfer between the steam and the food product. This will better maintain the cooking temperature upon arranging a food product to be cooked, making the plate cooking device more efficient and more compact.

The volume, defined through the superposition of the lower wall, the pleated metal sheet and the cooking plate, may additionally be closed by side walls so as to form a heat space.

According to a characteristic of this invention, the pleated metal sheet are mounted through soldering between the lower wall and the cooking plate.

Such a soldering may be performed under vacuum. This allows to manufacture the heat space from the lower wall, the connecting means and the cooking plate, in one single operation.

The specification also relates, as an intermediary product, to connecting means adapted for maintaining a cooking plate, of a device for plate cooking food products, of the plancha type, such as defined above, in a planar state and arranged so that the pressure generated by the saturated steam, itself generated by the presence of the products to be cooked on the plate, may be applied evenly substantially on the whole lower surface of the plate submitted to the action of the saturated steam.

Advantageously, the connecting means comprise a plurality of contact elements, connected therebetween and adapted for being in contact with the cooking plate.

Such contact elements are preferably equi-distributed.

The invention also concerns a method of manufacturing a contact cooking device for food products, of the plancha type, comprising a cooking plate and heating means for heating and maintaining the plate at a substantially homogeneous and constant temperature through generating saturated steam and water condensation under the plate in the presence of products to be cooked, connecting means for the plate being provided for maintaining it in a planar state, said connecting means being in the form of a pleated metal sheet which is arranged so that the pressure generated by the saturated steam, itself generated by the presence of the products to be cooked on the plate, could be applied evenly substantially on the whole lower surface of the plate submitted to the action of the saturated steam, said method comprising the steps of:
- arranging the pleated material under the plate, and
- soldering the pleated material to the plate.

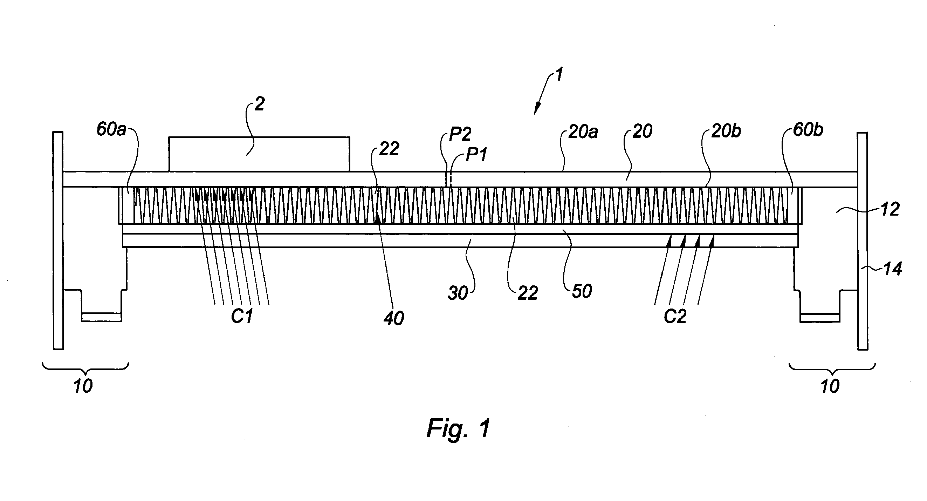

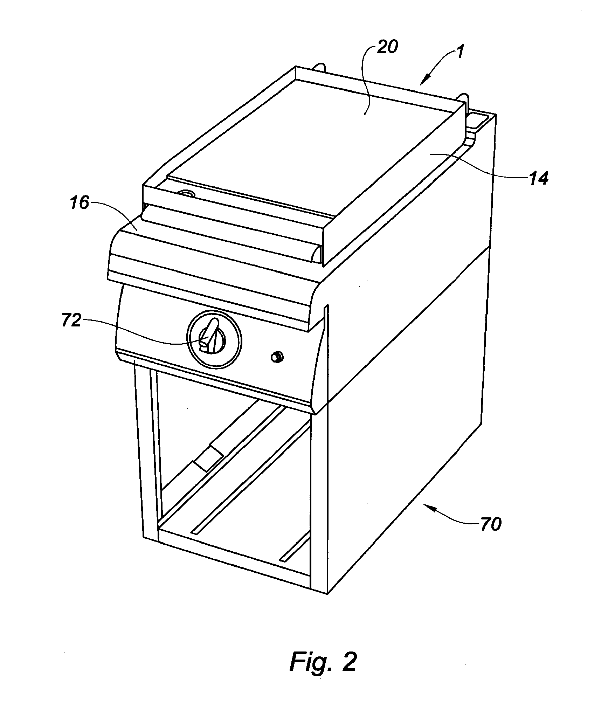

The characteristics and advantages of the present invention will become more evident from reading the following description of an embodiment of this invention, given by way of a non limitative example, with reference to the corresponding appended drawing, wherein figure 1 shows a cross section view of a plate cooking device of the plancha type according to this invention, and figure 2 describes a cooking apparatus comprising such a device.

The figure illustrates a cooking device 1 for food products 2 by plate of the plancha type according to this invention.

The cooking device 1 for food products 2 comprises:
- a frame 10,
- a cooking plate 20,
- heating means 30,
- connecting means 40, and
- a lower wall 50.

The frame 10 comprises a base 12 and feet 14. The base 12 is arranged for receiving the heating means 30 of the cooking plate 20. The base 12 supports, on the one hand, the cooking plate 20 and, on the other hand, the internal wall 50. The feet 14 allow, on the one hand, the support of the cooking device 1 on a plane 16 and, on the other hand, to laterally maintain the cooking plate 20.

The frame 10, the base 12 and the feet 14 may also allow to mount the cooking device 1 in an apparatus such as described herein below with reference to Fig. 2.

The cooking plate 20 is intended for receiving at least one food product to be cooked 2 and arranged in the base 12, with the lower wall 50, a cavity 22 wherein the connecting means 40 are mounted, for instance through soldering. The cooking plate 20 comprises an upper surface 20a intended for receiving the food products 2 to be cooked and a lower surface 20b.

Side walls 60a and 60b allow, with two other walls (not shown on this cross sectional view), to close the outline of the cavity so as to define a heat space, that is allowing for heat transfer between the heating means 30 and the cooking plate 20. Water is placed in the cavity 22 and is adapted for being heated.

The heating means 30, for example gas or electric ones, allow to heat the cavity 22 at the temperature selected for cooking.

The connecting means 40 of the cooking plate 20 have the shape of a pleated metal sheet 40, for instance being soldered between the lower wall 50 and the cooking plate 20 and provided for maintaining the cooking plate 20 in a planar state.

The pleated metal sheet 40 extends substantially entirely in the cavity 22. The pleated metal sheet 40 has a plurality of pleats, being connected therebetween and substantially equi-distributed. Such pleats allow the force applied by the pressure, being generated by the saturated steam in the cavity 22, to be applied substantially evenly or also on the whole lower surface 20b of the cooking plate 20.

The contact surfaces of the pleated metal sheet 40 with the lower side 20b of the cooking plate 20 being relatively low, the pressure applied on the lower surface 20b of the cooking plate 20 and the temperature of the lower surface 20b of the cooking plate 20 are homogeneous, contrarily to the existing solutions comprising cylindrical shaped struts.

The pleated metal sheet 40 is arranged so that the water condensation C1 under the action of the food products to be cooked 2 is able to extend substantially and evenly on the whole lower surface 20b of the cooking plate 20 submitted to the action of the saturated steam.

The heating provided by the heating means 30 allows for the direct heating C2 of the lower wall 50 by the heating means 30. The heated lower wall 50 then allows the transfer of heat to the water placed in the cavity 22, generating saturated steam and water condensation under the cooking plate 20, on its lower side 20b, so as to make uniform the pressure applied on the lower surface 20b of the cooking plate 20 and the temperature of the cooking plate 20.

When a product 2 to be cooked, with a temperature lower than the temperature of the heated cooking plate 20, is placed on said plate 20, the temperature difference induces a saturation of steam in the cavity 22, by the food products 2 to be cooked, and a water condensation on the lower surface 20b of the cooking plate 20. Such a condensation on the quasi-entirety of the surface of the lower side 20b of the cooking plate 20 allows the plate 20 to quickly return to a homogeneous and constant temperature.

Thus, upon the operation of the cooking device 1 according to this invention, the pleated metal sheet 40 is configured so that the temperature of a first point P1 of the cooking plate 20, located on the upper side 20a of the plate 20 to the vertical of a contact area of the pleated metal sheet 40 with the lower side 20b of the cooking plate 20, is substantially identical to that of a second point P2 of the cooking plate 20 located in the vicinity of the first point, between two pleats of the pleated metal sheet 40, and to the vertical of an area of the lower side 20b of the plate 20 that is not in contact with the pleated metal sheet 40.

Fig. 2 describes a cooking apparatus 70 coupled to the cooking device 1 according to this invention. The apparatus 70 is thus arranged for receiving the cooking device 1, and more particularly for receiving the frame 10, the base 12 and the feet 14.

In one embodiment of the cooking device 1 according to this invention, the heating means 30 may be heating means (not shown on Fig. 2) coupled to the apparatus 70. The apparatus 70 may thus comprise heating means able to heat the lower wall 50 and setting means 72 for the heating means operable to set said heating means and to adjust the temperature of the cooking plate 20.

## Claims

1. A contact cooking device (1) for food products (2), of the plancha type, comprising a cooking plate (20) and heating means (30) for heating and maintaining the plate (20) at a substantially homogeneous and constant temperature through generating saturated steam and water condensation under the plate (20) in the presence of products (2) to be cooked, connecting means (40) for the plate (20) being provided for maintaining it in a planar state, **characterized in that** the connecting means (40) are in the form of a pleated metal sheet which is soldered or brazed under the cooking plate and which is arranged so that the pressure generated by the saturated steam, itself generated by the presence of the products to be cooked (2) on the plate (20), could be applied evenly substantially on the whole lower surface (20b) of the plate (20) submitted to the action of the saturated steam.

2. The device according to claim 1, wherein the pleated metal sheet (40) is arranged so that the water condensation, generated by the presence of the products to be cooked (2) on the plate (20), extends substantially on the whole lower surface (20b) of the plate (20) submitted to the action of the saturated steam.

3. The device according to any of preceding claims, wherein, when the device (1) is in operation, the pleated metal sheet (40) is configured so that the temperature of a first point of the cooking plate, located on the upper side (20a) of the plate (20) to the vertical of a contact area of the pleated metal sheet (40) with the lower side (20b) of the cooking plate (20), is substantially identical to that of a second point of the cooking plate (20) located in the vicinity of the first point and to the vertical of an area of the lower side (20b) of the plate (20) that is not in contact with the pleated metal sheet (40).

4. The device according to any of preceding claims, said device (1) further comprising a lower wall (50) adapted for being heated by the heating means (30) and wherein the pleated metal sheet (40) is mounted between the cooking plate (20) and said lower wall (50).

5. The device according to claim 4, wherein the volume defined by the superposition of the lower wall (50), of the pleated metal sheet (40) and of the cooking plate (20) is further closed by side walls (60a, 60b) so as to form a heat space.

6. The device according to any of claims 4 and 5, wherein the pleated metal sheet (40) is mounted through soldering between the lower wall (50) and the cooking plate (20).

7. A method of manufacturing a contact cooking device (1) for food products (2), of the plancha type, comprising a cooking plate (20) and heating means (30) for heating and maintaining the plate (20) at a substantially homogeneous and constant temperature through generating saturated steam and water condensation under the plate (20) in the presence of products (2) to be cooked, connecting means (40) for the plate (20) being provided for maintaining it in a planar state, said connecting means (40) being in the form of a pleated metal sheet which is arranged so that the pressure generated by the saturated steam, itself generated by the presence of the products to be cooked (2) on the plate (20), could be applied evenly substantially on the whole lower surface (20b) of the plate (20) submitted to the action of the saturated steam, said method comprising the steps of arranging the pleated metal sheet (40) under the plate (20), and soldering the pleated metal sheet (40) to the plate (20).

## Patentansprüche

1. Kontaktkochvorrichtung (1) des Plancha-Typs für Lebensmittelprodukte (2), die eine Kochplatte (20) und Heizmittel (30) zum Erwärmen der Platte (20) auf eine im Wesentlichen homogene und konstante Temperatur und zum Aufrechterhalten derselben durch Erzeugen von gesättigtem Dampf und Wasserkondensation unter der Platte (20) beim Vorhandensein von zu kochenden Produkten (2) umfasst, wobei Verbindungsmittel (40) für die Platte (20) vorgesehen sind, um diese in einem ebenen Zustand zu halten, **dadurch gekennzeichnet, dass** die Verbindungsmittel (40) in der Form eines gefalteten Metallblechs vorliegen, das unter die Kochplatte gelötet oder hartgelötet ist und das so angeordnet ist, dass der durch den gesättigten Dampf erzeugte Druck, der wiederum durch das Vorhandensein der zu kochenden Produkte (2) auf der Platte (20) erzeugt wird, gleichmäßig im Wesentlichen auf die gesamte untere Oberfläche (20b) der Platte (20), die der Wirkung des gesättigten Dampfs ausgesetzt ist, aufgebracht wird.

2. Vorrichtung nach Anspruch 1, wobei das gefaltete Metallblech (40) so angeordnet ist, dass die Wasserkondensation, die durch das Vorhandensein der zu kochenden Produkte (2) auf der Platte (20) erzeugt wird, sich im Wesentlichen über die gesamte untere Oberfläche (20b) der Platte (20), die der Wirkung des gesättigten Dampfs ausgesetzt ist, erstreckt.

3. Vorrichtung nach einem der vorhergehenden Ansprüche, wobei das gefaltete Metallblech (40) so konfiguriert ist, dass die Temperatur eines ersten Punkts der Kochplatte, der sich auf der oberen Seite (20a) der Platte (20) bei der Vertikalen einer Kontaktfläche des gefalteten Metallblechs (40) mit der unteren Seite (20b) der Kochplatte (20) befindet, wenn die Vorrichtung (1) in Betrieb ist, im Wesentlichen identisch mit jener eines zweiten Punkts der Kochplatte (20) ist, der sich in der Nähe des ersten Punkts und bei der Vertikalen einer Fläche der unteren Seite (20b) der Platte (20) befindet, die mit dem gefalteten Metallblech (40) nicht in Kontakt ist.

4. Vorrichtung nach einem der vorhergehenden Ansprüche, wobei die Vorrichtung (1) ferner eine untere Wand (50) umfasst, die ausgelegt ist, durch die Heizmittel (30) erwärmt zu werden, und wobei das gefaltete Metallblech (40) zwischen der Kochplatte (20) und der unteren Wand (50) angebracht ist.

5. Vorrichtung nach Anspruch 4, wobei das Volumen, das durch die Überlagerung der unteren Wand (50) des gefalteten Metallblechs (40) und der Kochplatte (20) definiert ist, ferner durch Seitenwände (60a, 60b) so geschlossen ist, dass ein Heizraum gebildet wird.

6. Vorrichtung nach einem der Ansprüche 4 und 5, wobei das gefaltete Metallblech (40) durch Löten zwischen der unteren Wand (50) und der Kochplatte (20) angebracht wird.

7. Verfahren zum Herstellen einer Kontaktkochvorrichtung (1) des Plancha-Typs für Lebensmittelprodukte (2), die eine Kochpatte (20) und Heizmittel (30) zum Erwärmen der Platte (20) auf eine im Wesentlichen homogene und konstante Temperatur und zum Aufrechterhalten derselben durch Erzeugen von gesättigtem Dampf und Wasserkondensation unter der Platte (20) beim Vorhandensein von zu kochenden Produkten (2) umfasst, wobei Verbindungsmittel (40) für die Platte (20) vorgesehen sind, um diese in einem ebenen Zustand zu halten, wobei die Verbindungsmittel (40) in der Form eines gefalteten Metallblechs vorliegen, das so angeordnet ist, dass der durch den gesättigten Dampf erzeugte Druck, der wiederum durch das Vorhandensein der zu kochenden Produkte (2) auf der Platte (20) erzeugt wird, gleichmäßig im Wesentlichen auf die gesamte untere Oberfläche (20b) der Platte (20) ausgeübt wird, die der Wirkung des gesättigten Dampfs ausgesetzt ist, wobei das Verfahren die Schritte des Anordnens des gefalteten Metallblechs (40) unter der Platte (20) und das Löten des gefalteten Metallblechs (40) an die Platte (20) umfasst.

## Revendications

1. Dispositif de cuisson par contact (1) pour des produits alimentaires (2), du type plancha, comprenant une plaque de cuisson (20) et un moyen de chauffage (30) pour chauffer et maintenir la plaque (20) à une température essentiellement homogène et constante en produisant de la vapeur saturée et de la condensation d'eau sous la plaque (20) en la présence de produits (2) à cuire, un moyen de raccordement (40) pour la plaque (20) étant prévu pour la maintenir dans un état plan, **caractérisé en ce que** le moyen de raccordement (40) est sous la forme d'une feuille métallique qui est soudée ou brasée sous la plaque de cuisson et qui est disposée de manière à ce que la pression produite par la valeur saturée, elle-même produite par la présence des produits à cuire (2) sur la plaque (20), puisse être appliquée de manière égale essentiellement sur la totalité de la surface inférieure (20b) de la plaque (20) soumise à l'action de la vapeur saturée.

2. Dispositif selon la revendication 1, dans lequel la feuille métallique plissée (40) est disposée de manière à ce que la condensation d'eau, produite par la présence des produits à cuire (2) sur la plaque (20) s'étende essentiellement sur la totalité de la surface inférieure (20b) de la plaque (20) soumise à l'action de la valeur saturée.

3. Dispositif selon l'une quelconque des revendications précédentes, dans lequel, lorsque ce dispositif (1) est en service, la feuille métallique plissée (40) est configurée de manière à ce que la température d'un premier point de la plaque de cuisson, situé sur le côté supérieur (20a) de la plaque (20) à la verticale d'une zone de contact de la feuille métallique plissée (40) avec le côté inférieur (20b) de la plaque de cuisson (20), soit essentiellement identique à celle d'un deuxième point de la surface de cuisson (20) situé à proximité du premier point et à la verticale d'une zone du côté inférieur (20b) de la plaque (20) qui n'est pas en contact avec la feuille métallique plissée (40).

4. Dispositif selon l'une quelconque des revendications précédentes, ledit dispositif (1) comprenant en outre une paroi inférieure (50) adaptée de façon à être chauffée par le moyen de chauffage (30) et dans lequel la feuille métallique plissée (40) est montée entre la plaque de cuisson (20) et ladite paroi inférieure (50).

5. Dispositif selon la revendication 4, dans lequel le volume défini par la superposition de la paroi inférieure (50), de la feuille métallique plissée (40) et de la plaque de cuisson (20) est fermé en outre par des parois latérales (60a, 60b) de façon à former un espace de chaleur.

6. Dispositif selon l'une quelconque des revendications 4 et 5, dans lequel la feuille métallique plissée (40) est montée par brasage entre la paroi inférieure (50) et la plaque de cuisson (20).

7. Procédé de fabrication d'un dispositif de cuisson par contact (1) pour des produits alimentaires (2), du type plancha, comprenant une plaque de cuisson (20) et un moyen de chauffage (30) pour chauffer et maintenir la plaque (20) à une température essentiellement homogène et constante en produisant de la vapeur saturée et de la condensation d'eau sous la plaque (20) en la présence de produits (2) à cuire, un moyen de raccordement (40) pour la plaque (20) étant prévu pour la maintenir dans un état plan, ledit moyen de raccordement (40) étant sous la forme d'une feuille métallique plissée qui est disposée de manière à ce que la pression produite par la valeur saturée, elle-même produite par la présence des produits à cuire (2) sur la plaque (20), puisse être appliquée de manière égale essentiellement sur la totalité de la surface inférieure (20b) de la plaque (20) soumise à l'action de la vapeur saturée, ledit procédé comprenant les étapes consistant à disposer la feuille métallique plissée (40) sous la plaque (20) et à braser la feuille métallique plissée (40) à la plaque (20).
